# EUROPÄISCHE PATENTSCHRIFT

(11) **EP 0 678 347 B1**
(45) Veröffentlichungstag und Bekanntmachung des Hinweises auf die Patenterteilung: **04.12.1996**
(21) Anmeldenummer: 95101896.9
(22) Anmeldetag: 13.02.1995
(51) Int. Cl.: B09B 1/00, B09C 1/08, E02D 31/00, C02F 1/52

(54) **Verfahren zur Herstellung einer Barriere**
Process for making a barrier
Procédé d'obtention d'une barrière

(30) Priorität: 19.04.1994 DE 4413518; 09.12.1994 DE 4443828
(43) Veröffentlichungstag der Anmeldung: 25.10.1995
(73) Patentinhaber: Bakelite AG, 58642 Iserlohn-Letmathe (DE)
(72) Erfinder: Kempfert, Joachim, D-61476 Kronberg (DE); Oeste, Franz D., D-35274 Kirchhain-Schönbach (DE)

(56) Entgegenhaltungen:
- DE-A- 2 602 011
- GB-A- 749 662
- GB-A- 2 255 556
- US-A- 4 913 586

## Beschreibung

Die Erfindung betrifft ein Verfahren zur Herstellung einer Barriere zur Vermeidung der Ausbreitung von im Boden oder Grundwasser vorhandenen Schadstoffen.

Solche Barrieren sind in dem betreffenden technischen Gebiet allgemein bekannt.

Es ist Aufgabe der Erfindung, eine in situ erzeugbare Barriere zur Vermeidung der Ausbreitung von im Boden oder Grundwasser vorhandenen Schadstoffen und ein Verfahren zu ihrer Herstellung bereitzustellen, die eine sehr gute Abdichtung zeigt, die aber vom Redoxpotential bzw. Sauerstoffgehalt des Grundwassers unabhängig ist.

Die Lösung der Aufgabe erfolgt durch ein Verfahren zur Herstellung einer Barriere gemäß des Anspruchs 1 sowie durch Verwendung von Huminstoffen zur Herstellung derartiger Barrieren.

Es wurde gefunden, daß der kontaminierte Bereich eines verseuchten Bodens zum Grundwasserabstrom durch eine ausgerichtete Huminstoffbarriere einwandfrei abgegrenzt wird und daß an dieser Huminstoffbarriere durch eine sich ansiedelnde Mikroorganismenflora ein verstärkter Schadstoffabbau erfolgt.

Die Huminstoffbarriere wird vorzugsweise derart hergestellt, daß sie noch hydraulisch permeabel ist. Die über dem kontaminierten Bereich liegende Oberfläche braucht nicht versiegelt zu werden. Darüberhinaus ist die Huminstoffbarriere sorptions-, biomineralisations- und humifikationsaktiv und bewirkt daher, daß das sie durchdringende Wasser weitgehend von Schadstoffen befreit ist.

Ausgefällte Huminstoffe werden von Redoxpotentialen gleich welcher Art nicht in ihrer Löslichkeit beeinflußt und sind auch im Bereich der natürlichen Gegebenheiten vom pH-Wert unabhängig unlöslich. Die Huminstoffbarrieren sind demnach von der Art des Grundwassers und seinem Redoxpotential unabhängig beständig.

Die Huminstoffbarriere ist bevorzugt vertikal bezüglich der Grundwasserfließrichtung ausgerichtet und abstromig des Kontaminationsherdes angelegt. Anstelle einer Ausbildung in einer Ebene kann sie auch hufeisenförmig um den Kontaminationsherd angelegt sein, wobei die Öffnung auf der Seite des zuströmenden Grundwassers liegt, oder sie kann den Kontaminationsherd nach allen Richtungen umschließen.

Die in der Regel imhomogene Porenstruktur des Aquifers bedingt eine inhomogenes Grundwasserfließgeschwindigkeitsprofil. Dementsprechend versetzt entsteht auch die Huminstoffbarriere, wobei sie in den Aquiferschichten mit hoher Fließgeschwindigkeit entfernter vom Injektionsort generiert wird, hingegen im Schichten mit geringer Fließgeschwindigkeit näher am Injektionsort.

Die Herstellung der Huminstoffbarriere erfolgt durch Einbringen von Huminatlösung in den Boden und anschließende Ausfällung der Huminstoffe. Diese Ausfällung erfolgt durch Einbringen einer Säure- oder sauren Salzlösung in den mit Huminatlösung versetzten Boden. Da dem Fachmann bekannt ist, daß sich Huminstoffe in alkalischer wäßriger Lösung als Huminate lösen, durch Säuren aber wieder als in Wasser unlösliche Huminstoffe (Huminsäuren) ausgefällt werden, ist es für den Fachmann nicht überraschend, daß diese Fällung auch im Boden erfolgen kann. Überraschend jedoch ist, daß die Huminatlösung in einen Grundwasserstrom eingebracht werden kann und die Ausfällung der Huminstoffe auch dann erreicht wird, wenn die Säure erst zeitlich versetzt eingebracht wird. D.h. mit den gleichen Vorrichtungen können nacheinander Huminat- und Säure- oder saure Salzlösung in den vom Grundwasser durchströmten Boden eingebracht werden und es erfolgt trotzdem eine Ausfällung der Huminstoffe und damit eine Ausbildung der Huminstoffbarriere. Bevorzugt wird die Huminstoffbarriere hergestellt, indem abstromig und/oder oberstromig und/oder im Kontaminationszentrum eines Kontaminationsherdes eine wäßrige Huminatlösung in den Grundwasserleiter eingebracht wird. Vorzugsweise wird die Huminatlösung und die Säure- oder saure Salzlösung über die gesamte Mächtigkeit des kontaminierten Grundwasserleiters, also von dem Liegenden des Grundwasserleiters bis zum Grundwasserspiegel oder dem Hangenden des Grundwasserleiters eingebracht. Dabei erfolgt die Einbringung der Lösungen bevorzugt gleichmäßig über die Länge der zu erzeugenden Barriere.

Die Huminatlösung wird vorzugsweise durch weitgehend vertikal in den Grundwasserleiter eingebrachte perforierte Injektionsrohre in den Boden eingegeben.

Vorzugsweise nachdem die Huminatlösung aus den Filterrohren durch das Grundwasser in den natürlichen Grundwasserleiter eingespült worden ist, wird durch die gleichen Filterrohre eine wäßrige umweltverträgliche Säure- oder saure Salzlösung vorzugsweise in einer stöchiometrischen Menge, bezogen auf die zuvor infiltrierte Huminatmenge eingebracht.

Dabei hat sich überraschend gezeigt, daß trotz der zeitlich verzögerten Zugabe der Säure- oder sauren Salzlösung in den fließenden Grundwasserstrom bereits nach kurzer Laufstrecke der Huminatlösung eine Ausfällung der Huminstoffe durch Reaktion des gelösten Huminats mit der Säure geschieht. Das kann nur so erklärt werden, daß die Fließgeschwindigkeit der Huminationen im Grundwasser eine geringere ist als diejenige der Säureionen, so daß während des "Überholvorganges" der Huminationenfront durch die Säureionenfront die Reaktion zwischen Huminat und Säure durch Fällung der Huminsäure geschieht. Dabei wird die Huminsäure als feiner Niederschlag auf der festen Aquiferphase fixiert, während das Neutralisationsprodukt in der Form gelösten Salzes mit dem Grundwasser fortgetragen wird.

Die Grundwasserfließgeschwindigkeit und die in Abhängigkeit von der Grundwasserfließgeschwindigkeit gewählte Zeitdifferenz zwischen Huminatfiltration und Säurefiltration ist im wesentlichen ausschlaggebend für die Lokalität im grundwasserabstromseitigen Aquifer, an welcher die Huminstoffbarriere entsteht, wenn die Aquifere ähnliche Kornabmessungen und Gehalte organischer Substanzen enthalten. Es ist aber vorteilhaft, die Retardation der Huminatlösung im Aquifer in bezug auf die Grundwasserfließgeschwindigkeit experimentell zu testen, indem man das Lockergestein, das man aus dem Aquifer entnommen hat, in eine Glassäule füllt, unter Wasser einrüttelt und im überstauten Zustand langsam mit Wasser durchströmt mit einer Geschwindigkeit, die der Grundwasserfließgeschwindigkeit entspricht, und dann zu einem bestimmten Zeitpunkt kurzfristig Huminatlösung zugibt und deren Bewegung in der Glassäule verfolgt. Die Retardation der Säurelösung im Aquifer gegenüber der Grundwasserfließgeschwindigkeit ist in der Regel zu vernachlässigen.

Die gewählte Position der Huminstoffbarriere läßt sich nun durch die gezielte Zeitdifferenz zwischen Huminatzugabe und Säurezugabe in den Aquifer bestimmen.

Nach dem erfindungsgemäßen Verfahren ist es aber auch möglich, die Reaktion der Huminatlösung mit der Säurelösung in den Bereich der Infiltrationseinrichtung zu verlegen, wenn dies notwendig erscheint. Das hat natürlich den Nachteil, daß die Huminsäureausfällung direkt in den Infiltrationseinrichtungen und dem direkt benachbarten Aquifer geschieht. Das kann die Gebrauchsfähigkeit der Infiltrationseinrichtungen nachteilig beeinflussen, weil die Grundwasserpermeabilität des Aquifers durch die Huminsäurebeläge im Aquifer vermindert wird.

Mit dem erfindungsgemäßen Verfahren lassen sich Huminstoffimprägnationen des Aquifers an unzugänglichen Stellen erreichen, an denen, z.B. durch Überbauung, keine Möglichkeit der direkten Maßnahmen am Aquifer mit herkömmlichen Mitteln besteht.

Eine Wirkung der Huminstoffimprägnation des Aquifer ist die Verminderung der Grundwasserpermeabilität. Von wesentlich größerer Bedeutung ist jedoch die sorptive Kapazität der Huminsäure für Schwermetalle und organische Grundwasserverunreinigungen. Die Sorptionskapazität für organische Stoffe ist derjenigen von Aktivkohle vergleichbar. Die Schwermetallsorptionskapazität erreicht sogar diejenige von Ionenaustauschern.

Darüber hinaus bieten die ausgefällten Huminstoffe einen natürlichen Lebensraum für die im Grundwasser vorhandene Mikrobiologie und helfen dadurch, die natürlichen biologisch verursachten und biologisch induzierten Mineralisationsvorgänge zu beschleunigen.

Oftmals gelingt es nicht, nach einmaliger Huminatinjektion eine geschlossene Huminstoffbarriere in dem Aquifer zu plazieren, so daß Fenster im Aquifer entstehen, in denen kein Huminsäurebelag vorliegt. Oder es liegt ein zu geringer Huminsäurebelag auf den festen Aquiferpartikeln vor, der noch eine nicht ausreichende Permeabilitätsreduktionskapazität und/oder Sorptionskapazität hat oder dessen Sorptionskapazität bereits erreicht ist.

In diesen Fällen kann der Aquifer erneut über die vorhandenen Infiltrationsbrunnen mit Huminatlösung und anschließend mit Säurelösung infiltriert werden. Weil das Grundwasser den Weg des geringsten Widerstandes wählt, also die Stellen mit der höchsten Permeabilität, können bei der Nachimprägnierung bevorzugt die offenen Fenster im Aquifer imprägniert werden. Insofern besteht mit dieser Methode der Vorteil, jederzeit die Aquifersituation in Abhängigkeit von der Grundwasserqualität kontrolliert beeinflussen zu können.

Als natürliches Produkt des biotischen Stoffwechels und anorganischer Mineralisations- und Humifizierungsprozesse unterliegt auch die Huminstoffbarriere natürlichen Abbauprozessen.

Das trifft vor allen Dingen dann zu, wenn das Grundwasser Sauerstoff enthält. Aber selbst unter diesen Bedingungen ist zu erwarten, daß die Huminstoffbarriere nur im Laufe von Jahrhunderten abgebaut wird, weil sie selbst ein sehr stabiles Zwischenprodukt der natürlichen Abbauprozesse und somit wesentlicher Bestandteil natürlicher Böden ist.

Durch Nachimprägnieren können die Abbauverluste der Huminstoffbarriere jedoch wieder ausgeglichen werden.

Im sauerstoffarmen und sauerstofffreien Aquifer ist die Lebensdauer der Huminstoffbarriere unbegrenzt.

Auch durch an sich bekannte Maßnahmen, wie z.B. die Änderung der Grundwasserfließrichtung, Änderung der Grundwasserspiegelhöhen, die durch Infiltration oder Abpumpen von Grundwasser oder das Setzen von Barrieren wie z.B. Schlitzwänden oder das Einwirken von Unterdruck oder Überdruck auf den Grundwasserspiegel kann die Gestalt der nach dem erfindungsgemäßen Verfahren gebildeten Huminstoffbarriere modifiziert werden.

Auch kann durch gebildete Huminstoffbarrieren die Wirksamkeit bekannter Verfahren, wie z.B. das UVB-Verfahren der IE GmbH Reutlingen, das eine vertikale Zirkulation des Grundwassers im Aquifer anstrebt, verbessert und erweitert werden.

Durch die bevorzugt vertikale Ausrichtung der Huminstoffbarriere in Bezug auf die Grundwasserfließrichtung lassen sich in diesen Fällen, bei denen lokal eine torusförmige Topologie des Grundwasserflusses herbeigeführt wird durch Grundwasserzirkulation, auch Huminstoffbarrieren überwiegend horizontaler Ausrichtung generieren.

Einsetzbare Huminatlösungen sind alkalische oder neutrale Lösungen von Huminsäuren oder Huminstoffen, die in saurem Medium unlöslich sind und die daher bei Erniedrigung des pH-Wertes ausfallen. Eine andere Möglichkeit, die Huminsäuren oder Huminstoffe auszufällen, besteht darin, Komplexe mit Erdalkali- oder Schwermetallionen zu erzeugen.

Beispiele sind entweder alkalische Extrakte von natürliche Huminsäuren enthaltenden Produkten wie Braunkohle, Farberde oder Moorschlamm oder alkalische Lösungen synthetischer Huminstoffe, die durch Oxidation mehrwertiger phenolischer Verbindungen in alkalischem Medium erhalten werden.

Als Säuren können alle üblichen Mineralsäuren oder wasserlösliche Carbonsäuren eingesetzt werden. Bevorzugte Beispiele sind Salz- oder Essigsäure.

Saure Salzlösungen sind wäßrige Lösungen von Salzen starker Säuren mit schwachen Basen, die in wäßriger Lösung durch Hydrolyse sauer reagieren. Um eine möglichst effektive Wirkung einerseits zu erzielen und um andererseits die Belastung des Grundwassers mit Säure möglichst zu vermeiden, soll die Menge der eingesetzten Säure oder sauren Salze so bemessen sein, daß die Menge der Wasserstoffionen der Menge der Alkali- oder Ammoniumionen der eingesetzten Huminate entspricht.

Als metallische Fällungsmittel eignen sich vorzugsweise wäßrige Lösungen von Erdalkalimetall- und/oder von Eisen-(III)-salzen. Als Erdalkalisalze eignen sich insbesonder Calcium-chlorid, -sulfat oder-hydrogencarbonat.

Ein gewisser Nachteil des erfindungsgemäßen Verfahrens bei der Anwendung alkalischer Huminatlösungen liegt darin, daß das Grundwasser mit Salzen aus der Huminat-Säure-Reaktion angereichert wird. Die Art der verwendeten Huminat-Kationen und Säure-Anionen bestimmen die Art der Salzkontamination des Grundwassers. Dabei wird es sich in der Regel um eine Chloridkontamination handeln. Falls erforderlich, kann man aber das salzhaltige Grundwasser für den kurzen Zeitraum des Kontaminationseintritts abpumpen und so eine Grundwasserkontamination verhindern.

Andererseits ist es möglich, durch die Auswahlmöglichkeit der bei der Huminstoffbarrierebildung entstehenden Salze im Grundwasser abbaufähige Salze bei der Säure-Huminat-Reaktion zu generieren, wie z.B. Ammoniumacetat, die sich in sauerstoffhaltigen Grundwässern zu Wasser, Stickstoff und Kohlensäure zersetzen lassen.

Eine weitere Möglichkeit ist der Einsatz von Ammoniumhuminat ohne Säurezusatz oder salzartigen Amin-Huminsäurekomplexen, ggf. zusammen mit den biotischen Stoffwechsel unterstützenden organischen und anorganischen Stoffen. Durch die im Aquifer vorhandene biotische Aktivität wird die Bildung saurer Stoffwechselprodukte bzw. den organischen oder anorganischen Ammoniumstickstoff abbauender Organismen provoziert, wodurch die Huminsäure auch ohne Säurezusatz ausgefällt wird, ohne daß schädliche Salzkonzentrationen entstehen.

Hierdruch wird zusätzlich die natürliche Bildung und Anreicherung von organischem Kohlenstoff induziert aus dem sich im Laufe der Zeit zusätzlich wirksamer natürlicher Huminstoff aus der Detrituszersetzung generieren kann.

Es ist auch möglich, die Humatinjektion mit einer Silikatinjektion derart zu kombinieren, daß entweder eine gemischte wäßrige Silikat-/Huminatlösung angewendet wird oder aber daß Silikat- und Huminatlösung im zeitlichen Abstand injiziert werden, wobei entweder die Silikatlösung oder die Huminatlösung zuerst injiziert wird.

Die Huminat-/Silikatkombination wird dann vorteilhaft eingesetzt, wenn die Huminstoffbarriere zusätzlich zu ihrer sorptiven Kapazität hinsichtlich ihrer hydraulischen Dichtwirkung verbessert werden soll. Als lösliche Silikate werden bevorzugt Natrium- oder Kaliumsilikate oder deren Gemische angewendet.

Die zur Bildung der Huminstoffbarriere notwendige Säuremenge ist in diesen Fällen um den für die Kieselgelausfällung notwendigen Säureanteil zu erhöhen.

In einigen Fällen kann es vorteilhaft sein, die Huminstofflösung nicht durch vertikal in den Grundwasserleiter (Aquifer) eingebrachte Injektionsrohre einzubringen, sondern von der Oberfläche aus durch Verrieseln auf den Boden oder über Sickergräben. Diese Methode hat den Vorteil, daß von der Huminstofflösung auch die oberhalb des Aquifers liegenden Bodenschichten durchtränkt werden, so daß auch hier Huminstoff ausgefällt werden kann durch die über den gleichen Weg eingebrachten sauren Reaktionsmittel. Diese Methode ist dann vorteilhaft, wenn in den Bodenschichten oberhalb des Aquifers die Ausbreitung von Kontaminanten z.B. durch Bodenluftanpassung durch Sickerwasser oder durch Grundwasserhochstände verhindert oder zumindest vermindert werden soll. Im Boden oberhalb sowie im Aquifer selbst können durch diese Maßnahmen beliebig großflächige horizontale Huminstoffbarrieren generiert werden, deren Mächtigkeit sich von der Erdreichoberkante bis hin über die gesamte Aquifermächtigkeit erstrecken kann.

Es ist natürlich auch möglich, die vertikale Einbringung der gelösten Huminstoffe und Säuren mit deren horizontaler Einbringung - also über Verrieselungseinrichtungen, Sickergräben oder Sickerflächen in den Boden miteinander zu kombinieren um z.B. vertikale und horizontale Huminstoffbarrieren miteinander zu kombinieren.

## Patentansprüche

1. Verfahren zur Herstellung einer Barriere zur Vermeidung der Ausbreitung von im Boden oder Grundwasser vorhandenen Schadstoffen, wobei die Barriere durch Einbringen von Huminatlösung in den Boden und anschließende Ausfällung der Huminstoffe erzeugt wird.

2. Verfahren nach Anspruch 1, **dadurch gekennzeichnet,** daß die Ausfällung der Huminstoffe durch Einbringen einer Säure- oder Salzlösung in den mit Huminatlösung versetzten Boden herbeigeführt wird.

3. Verfahren nach den Ansprüchen 1 und 2, **dadurch gekennzeichnet,** daß Huminat- und Säure- bzw. Salzlösung in den Grundwasserstrom eingebracht werden.

4. Verfahren nach den Ansprüchen 1 bis 3, **dadurch gekennzeichnet,** daß die Einbringung der Huminat- und der Säure- oder Salzlösung über die Länge der zu erzeugenden Barriere gleichmäßig erfolgt.

5. Verfahren nach Anspruch 4, **dadurch gekennzeichnet,** daß Huminat- und Säure- oder Salzlösung über senkrechte, perforierte Injektionsrohre in den Boden eingegeben werden.

6. Verfahren nach Anspruch 1, **dadurch gekennzeichnet,** daß Huminat- und Säure- oder Salzlösung über Sikkergräben oder Sickerflächen oder mittels Verrieselung oder Kombination daraus in den Boden eingegeben werden.

7. Verwendung von Huminstoffen zur Herstellung einer Barriere zur Vermeidung der Ausbreitung von im Boden oder Grundwasser vorhandenen Schadstoffen.

## Claims

1. A method of producing a barrier to prevent the spreading of pollutants present in the soil or ground water, whereas the barrier is made by introducing huminate solution into the soil and subsequently precipitatin the humic substances.

2. A method according to claim 1, characterized in that the humic substances are precipitated by introducing an acid or salt solution into the soil mixed with huminate solution.

3. A method according to claims 1 and 2, characterized in that huminate and acid or salt solution are introduced into the ground water stream.

4. A method according to claims 1 to 3, characterized in that the huminate and the acid or salt solution are introduced uniformly along the length of the barrier to be produced.

5. A method according to claim 4, characterized in that huminate and acid or salt solution are introduced into the soil by way of vertical perforated injection pipes.

6. A method according to claim 1, characterized in that huminate and acid or salt solution are introduced into the soil by way of soakaway drains or surfaces or by means of seeping or a combination therof.

7. Use of huminates for the preparation of a barrier to prevent the spreading of pollutants present in the soil or ground water.

## Revendications

1. Procédé pour la fabrication d'une barrière destinée à empècher la propagation de substances nocives présentes dans le sol ou dans les eaux souterraines dans lequel la barrière est fait par introduction d'une solution d'huminate dans le sol et précipitation consécutive de l'humine.

2. Procédé selon la revendication 1 caractérisé en ce que la précipitation des humines est provoquée pal l'introduction d'une solution acide ou saline dans le sol imprégné d'une solution d'huminate.

3. Procédé selon les revendications 1 et 2, caractérisé en ce que la solution d'huminate et la solution acide ou saline sont introduites dans le courant des eaux souterraines.

4. Procédé selon les revendication 1 à 3, caracterisé en ce que l'introduction d'huminate et de la solution saline ou acide s'effectue d'une manière uniforme sur la longueur de la barrière à créer.

5. Procédé selon la revendication 4, caractérisé en ce que la solution d'huminate et la solution acide ou saline sont introduits dans le sol par l'intermédiaire de tuyaux d'injection perforés, verticaux.

6. Procédé selon la revendication 1, caractérisé en ce que la solution d'huminate et la solution acide ou saline sont introduites dans le sol par biais des surfaces ou de fosses de drainage ou d'infiltration ou au moyen de l'épandage ou d'une combinaison de ces opérations.

7. Utilisation des huminates pour la fabrication d'une barrière destinée à empècher la propagation de substances nocives présentes dans le sol ou dans les eaux souterraines.
